(19) Europäisches Patentamt

European Patent Office

Office européen des brevets

(11) EP 0 616 776 B1

## (12) EUROPEAN PATENT SPECIFICATION

(45) Date of publication and mention
of the grant of the patent:
**07.07.1999 Bulletin 1999/27**

(51) Int. Cl.⁶: **A23K 1/16**, A23K 1/18

(21) Application number: **94400630.3**

(22) Date of filing: **24.03.1994**

(54) **Feed for domestic fowls**

Geflügelfutter

Aliment pour volailles

(84) Designated Contracting States:
**DE FR GB**

(30) Priority: **24.03.1993 JP 6524093**

(43) Date of publication of application:
**28.09.1994 Bulletin 1994/39**

(73) Proprietor:
**MATSUTANI CHEMICAL INDUSTRIES CO. LTD.
Itami-shi, Hyogo-ken (JP)**

(72) Inventors:
• **Katta, Yasuo
Kako-gun, Hyogo-ken (JP)**
• **Wakabayashi, Shigeru
Takarazuka-shi, Hyogo-ken (JP)**

(74) Representative:
**Gillard, Marie-Louise et al
Cabinet Beau de Loménie
158, rue de l'Université
75340 Paris Cédex 07 (FR)**

(56) References cited:
**EP-A- 0 470 895          EP-A- 0 530 111
EP-A- 0 535 627          EP-A- 0 538 146
EP-A- 0 540 421**

## Description

The present invention relates to a feed for domestic fowls and more specifically to a feed for domestic fowls which can inhibit the formation of fatty liver and can in turn improve the meat quality and which permits the reduction in the content of cholesterol in eggs and can improve the egg-laying rate and the eggshell strength.

It has been a recent tendency to make the formula feeds for fowls more thick (so-called thickened feeds) or increase the content of proteins and make them calorific for the improvement of the efficiency thereof. Thus, fowls take energy more than the required energy intake and accordingly, there is a sign of frequent incidence of abnormalities in lipometabolism such as excess accumulation of fats in, for instance, peritoneal cavity, intestinal tracts and hypodermis or formation of fatty liver. This accordingly leads to reduction in the performance of meat production (inclusive of viscus meat) in case of the chicken breed and reduction in the egg-laying rate and in the rate of cracked eggs due to reduction in the eggshell strength in case of the egg breed.

Recently, eating habits have been improved and on the other hand, the diseases of adult people have become a matter of great concern, in particular, arterial scleroses have widely and deeply been recognized. Cholesterols derived from foods have been known as causative substances of arterial scleroses. Recent investigations have proved that there is a positive correlation between the quantity of cholesterols taken in the form of foods and the content thereof in the serum. Moreover, it has also been recognized that a positive correlation is observed between the quantity of cholesterols taken in the form of foods and the mortality rate of cardiopathy due to arterial scleroses and it has been proved that the mortality rate of cardiopathy due to arterial scleroses increases as the amount of cholesterols taken in the form of foods increases.

The fowl egg is a typical example of foods having high contents of cholesterols. The amounts of various foods taken and the mortality rate of cardiopathy were examined on adult male persons of 55 to 59-year-old and it was proved that there was a significant positive correlation between the amount of fowl egg-intake and the mortality rate of cardiopathy ($r = 0.666$). Nevertheless, the fowl egg is an excellent nutrient substance as a source of high quality protein, is a food desirably taken at least one per day and accordingly, there has been desired for the development of a technique capable of reducing the content of cholesterols in the fowl egg.

Under such circumstances, there has been proposed an attempt which comprises adding, for instance, middle chain fatty acids, unsaturated fatty acids, amino acids and/or vitamins to feeds for domestic fowls in order to prevent accumulation of fats in the fowl body and to thus inhibit the formation of fatty liver. However, most of these substances are expensive and are not practically used as additives for the feed. Furthermore, there is a strong suspicion that chemical substances remaining in the meat and eggs of fowls may adversely affect the human body. Accordingly, the use of, in particular, synthetic chemical substances is not preferred from the viewpoint of such problem of safety. Thus, there has been desired for the development of cheap and effective feeds for domestic fowls.

EP-A-0 470 895 discloses an indigestible dextrin prepared by treating pyrodextrin with at least one of α-amylase, β-amylase and glucoamylase, and optionally refining the resulting dextrin with activated carbon, ion exchange resins or the like, wherein the pyrodextrin is prepared by roating starch in the presence of a mineral acid.

EP-A-0 535 627, filed on September 30, 1992 and published on April 7, 1993, discloses an indigestible dextrin prepared by heat-treating corn starch in the presence of hydrochloric acid to obtain a pyrodextrin, hydrolyzing the pyrodextrin with α-amylase and glucoamylase and removing at least one-half of glucose formed from the resulting hydrolysate, said dextrin comprising a fraction other than glucose which contains at least 90 % of an indigestible component.

EP-A-0 540 421, filed on October 29, 1992 and published on May 5, 1993, discloses an indigestible dextrin prepared by heat-treating potato starch in the presenceof hydrochloric acid to obtain a pyrodextrin, hydrolyzing the pyrodextrin with α-amylase and glucoamylase and removing at least one-half of glucose formed from the resulting hydrolysate, said dextrin comprising a fraction other than glucose which contains at least 80 % of an indigestible component.

EP-A-0 530 111 discloses an indigestible dextrin prepared by adding 3-10 wt % of a 1 % hydrochloric acid solution to corn starch, stirring and aging the mixture in a mixer, preheating the mixture at 100-120° C to a water content of about 8 % and extruding the resulting mixture at a reaction temperature of 140-180° C. The resulting dextrin contains at least 60 % of indigestible component.

EP-A-0 538 146, filed on October 16, 1992 and published on April 21, 1993 discloses an indigestible dextrin prepared by adding 3-10 wt % of a 1 % hydrochloric acid solution to potato starch, stirring and aging the mixture in a mixer, preheating the mixture at 100-120° C to a water content of about 8 % and extruding the resulting mixture at a reaction temperature of 140-180° C. The resulting dextrin contains at least 60 % of indigestible component.

## SUMMARY OF THE INVENTION

Accordingly, an object of the present invention is to provide a feed for domestic fowls which is effective over the entire breeding period of the fowl, and which can prevent, in particular, accumulation of fats in the fowl body and the

2

formation of fatty liver to thus improve the meat quality, to reduce the content of cholesterols in eggs and to improve the egg-laying rate and the eggshell strength.

The inventors of this invention have conducted various studies to solve the foregoing problems associated with the conventional feeds for domestic fowls, have found out that the use of indigestible dextrin is quite effective for the improvement of the feeds and thus have completed the present invention.

Accordingly, the present invention relates to a feed for domestic fowls which comprises an indigestible dextrin, wherein the indigestible dextrin may be those prepared by roasting a starch in the presence of a mineral acid to give a pyrodextrin and treating the pyrodextrin with α-amylase; those prepared by treating the foregoing indigestible dextrin, treated with α-amylase, with glucoamylase, filtering and purifying the product, and then separating and removing a digestible fraction from the product through chromatography with an ion exchange resin; and those commercially available as will be detailed below.

DESCRIPTION OF THE PREFERRED EMBODIMENTS

The feed for domestic fowls comprising an indigestible dextrin of the present invention will be detailed below.

In the preparation of the indigestible dextrin used in the invention, a starch is first heat-treated in the presence of a mineral acid to give a pyrodextrin. Starches as raw materials for the indigestible dextrin incorporated into the feed for domestic fowls according to the present invention are not restricted to particular ones, but specific examples thereof include those derived from corn, potato, sweet potato, tapioca, wheat, barley and rice.

More specifically, a starch is mixed with a mineral acid (such as hydrochloric acid, nitric acid or sulfuric acid), preferably hydrochloric acid in an amount, for instance, ranging from 3 to 10 parts by weight of a 1% by weight aqueous hydrochloric acid solution per 100 parts by weight of the starch used and the resulting mixture is heated to give a pyrodextrin as an intermediate product. Preferably, the aqueous solution of the starch and the mineral acid is uniformly mixed, prior to the heat treatment, by stirring and aging in an appropriate mixer and then pre-drying at a temperature on the order of 100 to 120 °C to reduce the moisture content of the mixture to approximately 5% by weight. The heat treatment is carried out at a temperature ranging from 150 to 220°C for 10 minutes to 5 hours, preferably 15 to 60 minutes unlike the heating conditions for the heat treatment of the conventional dextrins (white dextrin and yellow dextrin) in the presence of acids. In this respect, the higher the temperature during the heat-treatment, the higher the content of indigestible components in the resulting product. However, the amount of colored substances in the product starts to increase at a temperature of about 180 °C. Thus, the heat treatment is more preferably performed at a temperature ranging from 150 to 180°C.

Alternatively, it is also possible to carry out the heat treatment at an elevated temperature for a short period of time by properly selecting a heating apparatus to be used. For instance, the mixture can efficiently and uniformly be heat-treated in an apparatus such as an extruder. It is desirable to properly control the conditions for the heat-treatment while taking into consideration the amount of the starch powder to be heat-treated and the content of the indigestible components required for a particular product.

Then the pyrodextrin thus obtained is dissolved in water to give an aqueous solution having a concentration ranging from 30 to 50% by weight. The solution is hydrolyzed by treating with α-amylase. Any known α-amylase product can be used, but the most preferred example of commercially available α-amylase is Termamyl® (available from Novo Nordisk Bioindustry Company; heat-resistant α-amylase produced by a strain Bacillus licheniformis).

The aqueous solution of the pyrodextrin is acidic in nature due to the mineral acid added during roasting and therefore, the pH of the aqueous solution of the pyrodextrin is controlled to the optimum pH of α-amylase. Any basic compound commonly known can be used for controlling the pH, but a sodium hydroxide solution is most effective. The pH value preferably ranges from 5.5 to 6.5. If it is less than the lower limit, the reaction rate is reduced, while if it exceeds the upper limit, the product is markedly colored. Preferably, α-amylase is added to the solution after the pH adjustment and it is added thereto in an amount ranging from 0.05 to 0.2% by weight on the basis of the amount of the pyrodextrin.

The hydrolysis with α-amylase proceeds at a temperature of about 80 to 100 °C, but preferably 85 to 90 °C, since coloring of the product becomes significant at a high temperature. The reaction time in general ranges from 5 minutes to 3 hours, for instance, a satisfactory result can be ensured by carrying out the reaction for about one hour.

The hydrolyzed solution thus obtained generally contains indigestible components in an amount ranging from 40 to 60% by weight on the basis of the weight of the solid contents of the solution. The term "indigestible dextrin" herein used means the dextrin comprising, as principal components, indigestible components and includes, for instance, a liquid product obtained by concentrating the foregoing hydrolyzed solution per se, a powdery product obtained by drying the solution through, for instance, spray drying, those obtained by optionally subjecting the hydrolyzed solution to purification treatments such as decoloring with, for instance, active carbon, filtration and desalting and then concentrating into a liquid product or drying to give a powdery product, or those obtained by further subjecting these products to a treatment with glucoamylase as will be detailed below to increase the content of the indigestible components. In this respect, the product obtained through only the α-amylase treatment and having a content of the indigestible components ranging from 40 to 60% by weight on the basis of the weight of the solid contents thereof will hereunder be referred to as "indigestible dextrin A".

As has been discussed above, the foregoing indigestible dextrin, i.e., the indigestible dextrin A can be additionally hydrolyzed with glucoamylase to further increase the content of the indigestible components. The glucoamylase is not restricted to those derived from specific origins and thus any commercially available ones may effectively be used in the invention. Moreover, glucoamylase products commonly used in general comprise a small amount of $\alpha$-amylase. Therefore, the pyrodextrin can be directly treated with glucoamylase comprising a small amount of $\alpha$-amylase without treating with $\alpha$-amylase to give the indigestible dextrin as the effective component of the present invention. However, if the glucoamylase used contains only a trace amount of $\alpha$-amylase, the resulting product has only a low content of the indigestible components. Therefore, it is most preferred to treat the pyrodextrin with $\alpha$-amylase then with glucoamylase. The glucoamylase treatment is preferably carried out at a pH ranging from 5.0 to 6.0. The amount of glucoamylase used in the treatment suitably ranges from 0.05 to 0.2% by weight on the basis of the weight of the indigestible dextrin as in the case of the $\alpha$-amylase treatment. The hydrolysis is performed at a temperature ranging from about 55 to 60°C and it is in general sufficient to carry out the hydrolysis for 24 to 48 hours.

Incidentally, it is evident to those skilled in the art that the amounts of $\alpha$-amylase and glucoamylase are not restricted to the ranges defined above and that the amounts thereof can arbitrarily be adjusted depending on the titers of the amylase products used. Moreover, the reaction time can arbitrarily be adjusted through the control of the amounts thereof to be added. In addition, the filtration rate during the purification can be improved by hydrolyzing the pyrodextrin with $\alpha$-amylase, then steaming the hydrolyzed solution under pressure at a temperature ranging from 115 to 135 °C, again treating with $\alpha$-amylase and finally treating with glucoamylase.

After treating with glucoamylase, the glucoamylase is deactivated by reducing the pH of the solution to about 3.5 or elevating the temperature of the solution up to about 80 °C. Thereafter, the solution is optionally subjected to decoloring with the usual active carbon, filtration, and desalting and decoloring with an ion exchange resin. Then the solution is concentrated to a concentration on the order of 50% by weight, followed by chromatography using an ion exchange resin and separation and removal of the resulting glucose. In this case, strongly acidic cation exchange resins can widely be used.

Specific examples of preferred strong acidic cation exchange resins include Amberlite IR-116, IR-118, IR120-B, XT-1022E and XT-471F (trade names of the products available from Organo Co., Ltd.), Diaion 2K-1B, SKK-102, SK-104, SK-106, SK-110, SK-112, SK-116 and FR-01 (trade names of the products available from Mitsubishi Chemical Industries Ltd.), XFS-43281.00, 43280.00, 43279.00 and 43278.00 (trade names of the products available from Dow Chemical Japan Ltd.).

In general, these resins are preferably converted into alkali metal or alkaline earth metal-forms prior to practical use. To improve the separability of the indigestible components from the glucose component, the flow rate of the solution passing through a column is preferably adjusted depending on the kinds of resins used, but the flow rate (SV) in general ranges from 0.1 to 0.6, preferably 0.2 to 0.4. The use of a flow rate beyond the range defined above may impair the workability and separability. The temperature during passing the solution through the column ranges from 20 to 70 °C and preferably 50 to 70°C. The use of a temperature of less than the lower limit may impair the separability of the indigestible component-containing fraction from the glucose-containing fraction or the viscosity of the solution increases and the capacity of the resin is in turn impaired. On the other hand, if the temperature exceeds the upper limit, the solution causes browning and other properties thereof are often impaired.

The indigestible dextrin obtained by additionally treating the indigestible dextrin A with glucoamylase and having an indigestible component-content of, in general, 50 to 90% by weight on the basis of the weight of the solid contents will hereunder be referred to as "indigestible dextrin B".

The indigestible dextrin used in the invention as the effective component may be commercially available ones. Examples of such easily and commercially available indigestible dextrin products include "Pinefiber" (trade name of the product available from Matsutani Chemical Industries Co., Ltd.) for the foregoing indigestible dextrin A obtained by treating the pyrodextrin simply with $\alpha$-amylase and "Fibersol #2 (trade name of the product available from Matsutani Chemical Industries Co., Ltd.) for the foregoing indigestible dextrin B obtained by treating the pyrodextrin with $\alpha$-amylase and then with glucoamylase. These commercially available indigestible dextrins comprise the indigestible components in amounts of about 55% by weight and about 90% by weight respectively and both of them have an average molecular weight of about 1600. Conventional formula of feeds for domestic fowls comprise crude fibers in the form of indigestible polysaccharides in an amount ranging from about 3 to 6% by weight, but the crude fibers are insoluble in water. On the other hand, the indigestible dextrin used in the invention as the effective component of the feed for domestic fowls is soluble in water and substantially differs from the conventionally known indigestible polysaccharides.

The amount of the indigestible dextrin is preferably not less than 0.2% by weight for the indigestible dextrin A and not less than 0.1% by weight for the indigestible dextrin B, on the basis of the total weight of the feed for domestic fowls. If the amount of the indigestible dextrin A or the indigestible dextrin B is less than 0.2% by weight or less than 0.1% by weight respectively, the resulting feed does not satisfactorily exhibit the desired effects of the present invention.

Moreover, if the amount of the indigestible dextrin A or the indigestible dextrin B is more than 10% by weight or more than 5% by weight respectively, any further enhancement of the effects through the addition thereof is not expected. Therefore, the amount of the indigestible dextrin A preferably ranges from 0.2 to 10% by weight and that of the indigestible dextrin B preferably ranges from 0.1 to 5% by weight.

The feed for domestic fowls can be obtained by adding the indigestible dextrin to a basal feed and mixing them, but the method for the addition thereof is not critical. For instance, the indigestible dextrin may be added by distributing or spraying a liquid containing the indigestible dextrin on the basal feed; or mixing the basal feed with the added indigestible dextrin in a powdery state, with the latter method being preferred because it is easily practicable. The feed for domestic fowls of the present invention can be used irrespective of, for instance, the kinds of domestic fowls, daily ages, methods for feeding and breeding and accordingly can be applied to the usual poultry farming method.

The feed for domestic fowls of the present invention is effective over the entire breeding period of the fowl, can prevent, in particular, accumulation of fats in the fowl body and hence formation of fatty liver to thus improve the meat quality, to reduce the content of cholesterols in eggs and to improve the egg-laying rate and the eggshell strength.

The present invention will hereunder be explained in more detail with reference to the following non-limitative working Examples and the effects practically attained by the invention will also be discussed in detail.

In the following Examples, the content of the indigestible components in the indigestible dextrin, the cholesterol contents in the liver and fowl eggs (yolk) and the triglyceride content in the liver are determined by the methods detailed below, respectively.

[Determination of Content of Indigestible Components in Indigestible Dextrin]

The content of the indigestible components present in the indigestible dextrin used in the feed for domestic fowls is determined by a modified method of that disclosed in "Quantitative Analysis of Indigestible Components" (DENPUN KAGAKU (Starch Science), 1990, Vol 37, No. 2, p. 107).

The modified method comprises accurately weighing out 1 g of a sample of the indigestible dextrin and adding 50 ml of a 0.05 M phosphate buffer (pH 6.0) and then 0.1 ml of $\alpha$-amylase (Termamyl$^®$ 120L, having a titer of 120 KNU/g; available from Novo Nordisk Bioindustries, Ltd.) to the sample to react them at 95°C for 30 minutes. After cooling the reaction system, the pH thereof is again adjusted to 4.5, then 0.1 ml of amyloglucosidase (No. A-3042, having a titer of 6100 units/ml; available from Sigma Company) is added to the reaction system, the reaction is continued at 60 °C for 30 minutes and the system is heated up to 90 °C to terminate the reaction. After completion of the reaction, the reaction solution is filled up to 100 ml with water and subjected to determination of the content of glucose present therein by the pyranose oxidase method and thus the content of the indigestible components (%) is calculated from the resulting glucose content (B) and that of the sample (A), separately determined in the same manner, prior to the reaction according to the following equation:

$$\text{The content of indigestible components (\% by weight)} = [1 - A - (B - A) \times 0.9] \times 100$$

wherein A is the glucose content (g) determined prior to the reaction and B is the glucose content (g) determined after the reaction.

[Quantitative Analysis of Cholesterol in Liver]

This method comprises accurately weighing out about 0.1 g of tissue slices of a liver, introducing them into a test tube, adding 2 ml of a 45% by weight aqueous potassium hydroxide solution, heating at 120 °C for one hour in an autoclave, then cooling, adding 2 ml of ethanol, sufficiently stirring in a homomixer, adding 5 ml of n-hexane, stirring for additional 2 minutes, dispensing 1 ml of the hexane phase into another test tube, evaporating the hexane, adding 0.5 ml of isopropyl alcohol, quantitatively determining the amount of cholesterol by the enzyme method and calculating the cholesterol content in the liver sample according to the following equation:

$$\text{Cholesterol Content in Liver (mg/g)} = [\text{measured value (mg/dl)} \times 0.5 \times 5]/[100 \times \text{weight of the liver sample (g)}]$$

[Quantitative Analysis of Triglyceride in Liver]

This method comprises accurately weighing out about 0.1 g of liver tissue slices which are cut into tiny pieces with a razor blade, introducing them into a test tube, adding 5 ml of isopropyl alcohol, allowing to stand for 5 minutes, stirring for 3 minutes in a homomixer to extract lipids present therein, centrifuging 10 minutes at 3000 rpm, quantitatively determining the amount of triglyceride present in the supernatant liquid by the enzyme method and calculating the triglyceride content in the liver sample according to the following equation:

Triglyceride Content in Liver (mg/g)= [measured value (mg/dl) × 5]/[100 × weight of the liver sample (g)]

[Quantitative Analysis of Cholesterol in Fowl Egg]

The yolk is weighed, lyophilyzed and then pulverized. At this stage, the loss in weight on drying is recorded. The lyophilized sample (about 0.5 g) and sea sand (1 g) are introduced into a 50 ml volume graduated flask. To the mixture, there are added 20 ml of a 0.5 mole/l alcoholic KOH solution and 10 ml of isopropyl alcohol, followed by heating at 60 °C for 80 minutes in warmed water, cooling down to room temperature, addition of isopropyl alcohol to a total volume of 50 ml, filtration, quantitative inspection of the resulting transparent solution as a specimen for the amount of cholesterol present therein and calculating the cholesterol content in the sample according to the following equation:

Cholesterol Content in Yolk (mg/g)= [measured value (mg/dl)] × 49.6/E × (100-M)/100

wherein E means the weight of the lyophilized sample (g) and M means the loss in weight on drying (%).

Example 1

In this Example, fowls belonging to 3-way cross fowls [white Plymouth rock species ♂ × (Satsuma fowl ♂ × Nagoya Species ♀)] which were 110-day-old and which had been put to grassland were used as sample fowls. Ten female fowls were divided into two groups each comprising 5 fowls and each fowl was fattened in an open cage-single pen for 14 days. These fouls of each group were fattened up by feeding, during the fattening period, them with a feed of the present invention comprising a feed for broiler finishing (trade name: Super Final; available from Showa Sangyo Co., Ltd.) having a mixing ratio shown in Table 1 and a composition shown in Table 2 and 5% by weight of an indigestible dextrin B (Fibersol #2; having an indigestible component-content of about 90% by weight) or the feed for broiler finishing per se (control group) for the purpose of comparison.

Table 1

| Kinds of Raw Materials | Mixing Ratio | Raw Materials |
|---|---|---|
| Cereals | 70% | corn, milo |
| Vegetable Oil Meal | 17% | soybean oil meal, corn gluten meal |
| Animal Feed | 8% | fish meal, meat/bone meal |
| Other Materials | 5% | animal oil and fats, lecithin for feed, common salt, calcium carbonate |
| Feed Additives | | vitamin A, vitamin $D_3$, vitamin E, pantothenic acid, folic acid, vitamin $B_{12}$, vitamin $K_3$, vitamin $B_1$, vitamin $B_2$, vitamin $B_6$, nicotinic acid, choline, manganese sulfate, iron sulfate, copper sulfate, zinc sulfate, cobalt sulfate, potassium iodate, methionine, lysine, ethoxyquin |

Table 2

| Component | Amount |
|---|---|
| Crude Protein | not less than 18.0% |
| Crude Fat | not less than 5.0% |
| Crude Fiber | not more than 4.0% |
| Crude Ash | not more than 7.0% |
| Calcium | not less than 0.70% |
| Phosphorus | not less than 0.55% |
| Metabolic Energy/Kg | not less than 3200 Kcal |

After completion of the fattening period, the fowl samples were inspected for the gain of body weight, the amount of feed intake, the weight of the liver, the rate (%) of the liver weight with respect to the body weight, the degree of fatty liver (Fat Liver Score: FLS; 5-stage evaluation according to the color model) and the triglyceride value (TG) in the serum. The results thus obtained are summarized in the following Table 3.

Table 3

| Items Determined | Feed of the Invention | Comparative Feed |
|---|---|---|
| Gain of Body Weight (g) | 432 | 434 |
| Amount of Feed Intake (g) | 2000 | 2000 |
| Weight of Liver (g) | 60.6 | 72.4 |
| Rate of Liver Weight/Body Weight (%) | 2.2 | 2.5 |
| FLS | 3.6 | 4.2 |
| TG in Serum (mg/dl) | 476 | 671 |

As seen from the results listed in Table 3, the group fed with the indigestible dextrin-containing feed of the invention had a low liver weight, hence a low rate (%) of the liver weight with respect to the body weight, a low FLS value and hence a low degree of fat-accumulation and a low triglyceride value in the serum as compared with those observed for the group fed with the usual feed free of the indigestible dextrin although the gain of body weight and the amount of feed intake were identical to those for the control group. The low triglyceride value in the serum indicates that the lipid-metabolism of the fowls was improved and that the indigestible dextrin permitted the prevention of the fowls from suffering from hyperlipidemia.

Example 2

In this Example, fowls belonging to 3-way cross fowls [white Plymouth rock species ♂ × (Satsuma fowl ♂ × Nagoya Species ♀)] which were 28-day-old and which had been crate-fattened were used as sample fowls. Male or female chicks (20 chicks each) were divided into two groups each comprising 10 chicks and fattened according to the windowless-floor feeding for 84 days. These chicks of each group were fattened up by feeding, during the fattening period, them with a feed of the present invention comprising a feed for the latter period-broiler (trade name: Super Pro A; available from Showa Sangyo Co., Ltd.) having a mixing ratio shown in Table 4 and a composition shown in Table 2 or a feed for broiler finishing used in Example 1 and 5% by weight of an indigestible dextrin B (Fibersol #2) or either of the feeds free of the indigestible dextrin (control groups) for the purpose of comparison.

Table 4

| Kinds of Raw Materials | Mixing Ratio | Raw Materials |
|---|---|---|
| Cereals | 70% | corn, milo |
| Vegetable Oil Meal | 17% | soybean oil meal, corn gluten meal |
| Animal Feed | 8% | fish meal, meat/bone meal |
| Other Materials | 5% | animal oil and fats, lecithin for feed, common salt, calcium carbonate |
| Feed Additives |  | nosiheptide, sodium salinomycin, vitamin A, vitamin $D_3$, vitamin E, pantothenic acid, folic acid, vitamin $B_{12}$, vitamin $K_3$, vitamin $B_1$, vitamin $B_2$, vitamin $B_6$, nicotinic acid, choline, manganese carbonate, iron sulfate, copper sulfate, zinc carbonate, cobalt sulfate, calcium iodate, methionine, lysine, ethoxyquin |

After completion of the fattening period, the fowl samples were inspected for the gain of body weight, the amount of feed intake, the weight of the liver, the rate (%) of the liver weight with respect to the body weight, the degree of fatty liver (Fat Liver Score: FLS; 5-stage evaluation according to the color model, b value determined by a color difference meter), the triglyceride value (TG) in the serum and the fat contents in the liver, breast meat and dark meat (Soxhlet: SL value; EM scan: EM value). The results thus obtained are summarized in the following Table 5.

Table 5

| Items Determined | Feed of the Invention | Comparative Feed |
|---|---|---|
| Gain of Body Weight (g) | 2878 | 2889 |
| Amount of Feed Intake (g) | 8634 | 8667 |
| Weight of Liver (g) | 52.0 | 55.5 |
| Rate of Liver Weight/Body Weight (%) | 1.7 | 1.8 |
| FLS | 2.4 | 3.5 |
| b Value | 9.8 | 11.4 |
| TG in Serum (mg/dl) | 31 | 84 |
| Fats in Liver (%) | 4.7 | 8.8 |
| Soxhlet Value (%) | | |
| breast meat with the skin | 13.0 | 16.3 |
| dark meat with the skin | 18.5 | 17.9 |
| EM Scan Value (%) [1] | | |
| breast meat with the skin | 14.3 | 15.5 |
| dark meat with the skin | 18.0 | 19.9 |

[1]: Calculated on the basis of a regression formula.

As seen from the results listed in Table 5, the group fed with the indigestible dextrin-containing feed of the invention had a low liver weight, hence a low rate (%) of the liver weight with respect to the body weight, low FLS and b values and hence a low degree of fatty liver and a low triglyceride value in the serum as compared with those observed for the control groups fed with the usual feed free of the indigestible dextrin although the gain of body weight and the amount of feed intake are identical to those for the control group.

Male and female fowls fattened in Example 2 (5 animals each) were inspected for the amounts of cholesterol and triglyceride present in the liver. The results thus obtained are summarized in the following Table 6.

Table 6

| Items Determined | | Feed of the Invention | Comparative Feed |
|---|---|---|---|
| Male Fowls | | | |
| Cholesterol | mg/g | 3.12* | 3.54 |
| | mg/liver | 156* | 208 |
| Triglyceride | mg/g | 15.9 | 18.7 |
| | g/liver | 0.91 | 1.10 |
| Female Fowls | | | |
| Cholesterol | mg/g | 2.97 | 2.63 |
| | mg/liver | 141 | 128 |
| Triglyceride | mg/g | 31.2* | 100.4 |
| | g/liver | 1.47* | 5.74 |

The results listed in Table 6 indicate that the male group fed with the feed of the present invention and fattened in Example 2 exhibited a significant reduction of the cholesterol content in the liver, but did not show any significant change in the amount of triglyceride, while the female fowl group fed with the feed of the present invention did not show any significant change in the cholesterol content in the liver, but showed a significant reduction in the triglyceride content.

Then the quality of chicken was evaluated by sensory tests. Dark meat of two female fowls of each group was cut into about 2 cm square cubes, common salt was added in an amount of 1% per unit weight of the meat, heated on a frying pan till even the meat core changed its color to give a meat sample broiled with salt. Separately, breast meat of two male fowls selected from each group was cut into about 2 cm square cubes, immersed in a 5% aqueous common salt solution for 5 minutes and then steamed for 30 minutes to give a salted and steamed sample. The quality of the meat sample broiled with salt was examined by a sensory test whose panel comprised 23 panelists and evaluated according to 5-stage evaluation criteria and the results obtained were summarized in the following Table 7. On the other hand, the salted and steamed sample was likewise examined by a sensory test whose panel comprised 17 panelists and evaluated according to 5-stage evaluation criteria and the results obtained were summarized in the following Table 8.

Table 7

| Items Examined | Feed of the Invention | Comp. Feed |
|---|---|---|
| Good smell | 0% | 0% |
| Palatability | 26.9% | 17.4% |
| Smooth and pleasant on the palate | 11.5% | 0% |
| Plain taste | 3.8% | 17.4% |
| Firm and resistant to the teeth | 23.1% | 8.7% |
| Being in prime of grease | 3.8% | 13.0% |
| Giving out a bad smell | 3.8% | 17.4% |
| Hard | 3.8% | 4.3% |
| Lacking in moisture | 19.2% | 8.7% |
| Soft | 0% | 8.7% |
| Others | 4.1% | 4.4% |
| Total Score | 76 | 68.5 |
| Average | $3.6 \pm 1.2$ | $3.3 \pm 1.2$ |

Table 8

| Items Examined | Feed of the Invention | Comp. Feed |
|---|---|---|
| Good smell | 0% | 0% |
| Palatability | 0% | 0% |
| Smooth and pleasant on the palate | 0% | 0% |
| Plain taste | 13.3% | 18.8% |
| Firm and resistant to the teeth | 6.7% | 25.0% |
| Being in prime of grease | 0% | 0% |
| Giving out a bad smell | 0% | 12.5% |
| Hard | 6.7% | 18.8% |
| Lacking in moisture | 40.0% | 12.5% |
| Soft | 26.7% | 6.3% |

Table 8 (continued)

| Items Examined | Feed of the Invention | Comp. Feed |
|---|---|---|
| Others | 6.6% | 6.1% |
| Total Score | 51.5 | 51.0 |
| Average | $3.0 \pm 0.8$ | $3.0 \pm 1.12$ |

Example 3

Chicks of ovum recovery-fowls (belonging to DEKALB XL-L(Delta); 24 chicks) were divided into two groups. The first group was fed with a commercially available formula feed (formula feed as a chick starter; available from Nippon Formula Feed Mfg. Co., Ltd.) having a mixing ratio shown in Table 9 and a composition shown in Table 10 up to 4-week-old; with a commercially available formula feed (formula feed for growing middle chicks; available from Nippon Formula Feed Mfg. Co., Ltd.) having a mixing ratio shown in Table 11 and a composition shown in Table 12 during 5 to 10-week-old; with a commercially available formula feed (formula feed for feeding large chicks; available from Nippon Formula Feed Mfg. Co., Ltd.) having a mixing ratio shown in Table 13 and a composition shown in Table 14 during 11 to 20-week-old; and with a commercially available formula feed (formula feed for mature fowls; available from Nippon Formula Feed Mfg. Co., Ltd.) during 21 to 27-week-old.

On the other hand, the second group was fattened up to 27-week-old by feeding them with the foregoing feeds each of which comprised 5% by weight of the indigestible dextrin B (Fibersol #2).

Table 9

| Kinds of Raw Materials | Mixing Ratio | Raw Materials |
|---|---|---|
| Cereals | 54% | corn, milo |
| Vegetable Oil Meal | 26% | soybean oil meal, corn germ meal, rapeseed oil meal |
| Animal Feed | 7% | fish meal, meat/bone meal |
| Chaff and Bran | 7% | corn gluten feed |
| Other Materials | 5% | animal oil and fats, alfalfa meal, corn steep liquor, calcium carbonate, common salt |
| Feed Additives | | amprolium, ethopavate, virginiamycin, vitamin A, vitamin $D_3$, vitamin E, vitamin $K_3$, vitamin $B_1$, vitamin $B_2$, vitamin $B_6$, nicotinic acid, pantothenic acid, biotin, folic acid, vitamin $B_{12}$, choline, methionine, zinc carbonate, calcium iodate, cobalt sulfate, iron sulfate, copper sulfate, manganese sulfate, ethoxyquin |

Table 10

| Component | Amount |
|---|---|
| Crude Protein | not less than 20.3% |
| Crude Fat | not less than 2.5% |
| Crude Fiber | not more than 6.0% |
| Crude Ash | not more than 8.0% |
| Calcium | not less than 0.70% |
| Phosphorus | not less than 0.55% |
| Metabolic Energy/Kg | not less than 2900 Kcal |

Table 11

| Kinds of Raw Materials | Mixing Ratio | Raw Materials |
|---|---|---|
| Cereals | 60% | corn, milo |
| Vegetable Oil Meal | 16% | soybean oil meal, corn germ meal, rapeseed oil meal |
| Animal Feed | 5% | fish meal, meat/bone meal |
| Chaff and Bran | 14% | corn gluten feed, rice bran |
| Other Materials | 5% | animal oil and fats, alfalfa meal, corn steep liquor, calcium carbonate, common salt |
| Feed Additives | | amprolium, ethopavate, sulfaquinosaline, virginiamycin, vitamin A, vitamin $D_3$, vitamin E, vitamin $K_3$, vitamin $B_1$, vitamin $B_2$, vitamin $B_6$, nicotinic acid, pantothenic acid, biotin, folic acid, vitamin $B_{12}$, choline, methionine, zinc carbonate, calcium iodate, cobalt sulfate, iron sulfate, copper sulfate, manganese sulfate, ethoxyquin |

Table 12

| Component | Amount |
|---|---|
| Crude Protein | not less than 17.0% |
| Crude Fat | not less than 2.5% |
| Crude Fiber | not more than 6.0% |
| Crude Ash | not more than 9.0% |
| Calcium | not less than 0.70% |
| Phosphorus | not less than 0.55% |
| Metabolic Energy/Kg | not less than 2770 Kcal |

Table 13

| Kinds of Raw Materials | Mixing Ratio | Raw Materials |
|---|---|---|
| Cereals | 62% | corn, milo, cassava meal |
| Chaff and Bran | 15% | corn gluten feed, rice bran, wheat bran |
| Vegetable Oil Meal | 11% | soybean oil meal, corn germ meal, rapeseed oil meal |
| Animal Feed | 5% | fish meal, meat/bone meal |
| Other Materials | 7% | alfalfa meal, molasses, corn steep liquor, calcium carbonate, common salt |
| Feed Additives | | vitamin A, vitamin $D_3$, vitamin E, vitamin $K_3$, vitamin $B_1$, vitamin $B_2$, vitamin $B_6$, nicotinic acid, pantothenic acid, biotin, folic acid, vitamin $B_{12}$, choline, methionine, zinc carbonate, calcium iodate, cobalt sulfate, iron sulfate, copper sulfate, manganese sulfate, ethoxyquin |

Table 14

| Component | Amount |
|---|---|
| Crude Protein | not less than 14.0% |
| Crude Fat | not less than 2.5% |
| Crude Fiber | not more than 6.0% |
| Crude Ash | not more than 9.0% |
| Calcium | not less than 0.70% |
| Phosphorus | not less than 0.45% |
| Metabolic Energy/Kg | not less than 2730 Kcal |

After starting the fattening, egg laying was initiated at about 20 weeks. Thereafter, the fowls were inspected for the rate of egg laying (number of eggs produced per day/number of bred fowls) up to 27 weeks at which the rate of egg laying was maximized, the average weight of the eggs produced, the rate of the required feed (total consumption of a feed for mature fowls/total weight of eggs produced), the eggshell strength (the magnitude of the load required for breaking each eggshell) and the content of cholesterol (mg/100 g yolk). The results thus obtained are summarized in the following Table 15.

Table 15

| Items Determined | Feed of the Invention | Comparative Feed |
|---|---|---|
| Rate of Egg Laying (%) | 92.9 | 84.5 |
| Average Weight of Egg (g) | 54.6 | 53.8 |
| Rate of Required Feed (%) | 2.90 | 2.97 |
| Eggshell Strenth (Kg/cm$^2$) | 3.89 | 3.40 |
| Content of Cholesterol (mg/100g yolk) | 1394 | 1483 |

As seen from the results listed in Table 15, the group fed with the indigestible dextrin-containing feed of the invention had a rate of egg laying which was about 8% higher than that observed for the group fed with the comparative feed, a significantly increased eggshell strength ($P < 0.05$) and a significantly reduced cholesterol content ($P < 0.05$).

Example 4

Fowls for ovum recovery (belonging to DEKALB XL-L (Delta); 36 fowls) of 33-week-old were divided into three groups. These fowls were bred for 6 weeks by feeding the first group with a commercially available formula feed for mature fowls (available from Nippon Formula Feed Mfg. Co., Ltd.), feeding the second group with the same feed to which the indigestible dextrin B (Fibersol #2) was added in an amount of 2.5% by weight and feeding the third group with the same feed to which the indigestible dextrin B (Fibersol #2) was added in an amount of 5% by weight. The cholesterol contents were determined before the breeding and 6 weeks after the breeding. The results thus obtained are summarized in Table 16.

Table 16

| Cholesterol Contents (mg/100g yolk) | | |
|---|---|---|
| Group | Before Breeding | After 6 Weeks |
| Group 1 (control group) | 1435 | 1556 |
| Group 2 (2.5% dextrin) | 1435 | 1411 |

Table 16 (continued)

| Cholesterol Contents (mg/100g yolk) | | |
|---|---|---|
| Group | Before Breeding | After 6 Weeks |
| Group 3 (5.0% dextrin) | 1428 | 1440 |

The results listed in Table 16 indicate that the groups fed with the indigestible dextrin-containing feeds had significantly reduced cholesterol contents (P < 0.05) in the eggs as compared with the group fed with the usual feed.

## Claims

1. Use of an indigestible dextrin for reducing the content of cholesterol in eggs and improving the egg-laying rate and the eggshell strength in the preparation of a feed for domestic fowls.

2. Use according to claim 1 wherein the indigestible dextrin is obtainable by roasting a starch in the presence of a mineral acid to give a pyrodextrin and treating the pyrodextrin with $\alpha$-amylase.

3. Use according to claim 2 wherein the content of the indigestible dextrin ranges from 0.2 to 10 % by weight.

4. Use according to claim 2 or 3 wherein the content of indigestible components in the indigestible dextrin ranges from 40 to 60 % by weight.

5. Use according to one of claims 2 to 4 wherein the mineral acid is hydrochloric acid.

6. Use according to claim 1 wherein the indigestible dextrin is obtainable by roasting a starch in the presence of a mineral acid to give a pyrodextrin, treating the pyrodextrin with $\alpha$-amylase, and then with glucoamylase, filtering and purifying the product, and then separating and removing a digestible fraction from the product through chromatography with an ion exchange resin.

7. Use according to claim 6 wherein the content of indigestible components in the indigestible dextrin ranges from 50 to 90 % by weight.

8. Use according to claim 6 or 7 wherein the content of the indigestible dextrin ranges from 0.1 to 5 % by weight.

9. Use according to one of claims 6 to 8 wherein the pyrodextrin is treated with glucoamylase containing a small amount of $\alpha$-amylase.

10. Use according to one of claims 6 to 9 wherein the ion exchange resin is a strongly acidic cation exchange resin which is converted into an alkali or alkaline earth metal form prior to use.

## Patentansprüche

1. Verwendung eines unverdaulichen Dextrins bei der Herstellung eines Geflügelfutters, das der Verminderung des Cholesterolgehaltes in Eiern und der Verbesserung der Eierlegengeschwindigkeit und der Eierschalenstärke dient.

2. Verwendung nach Ansprüch 1, wobei das unverdauliche Dextrin erhältlich ist durch Rösten einer Stärke in Gegenwart einer Mineralsäure, um ein Pyrodextrin zu ergeben, und durch Behandeln des Pyrodextrins mit $\alpha$-Amylase.

3. Verwendung nach Anspruch 2, wobei der Gehalt des unverdaulichen Dextrins im Bereich von 0,2 bis 10 Gew.-% liegt.

4. Verwendung nach Anspruch 2 oder 3, wobei der Gehalt der unverdaulichen Bestandteile in dem unverdaulichen Dextrin im Bereich von 40 bis 60 Gew.-% liegt.

5. Verwendung nach einem der Ansprüche 2 bis 4, wobei die Mineralsäure Salzsäure ist.

6. Verwendung nach Anspruch 1, wobei das unverdauliche Dextrin erhältlich ist durch Rösten einer Stärke in Gegen-

13

wart einer Mineralsäure, um ein Pyrodextrin zu ergeben, durch Behandeln des Pyrodextrins mit α-Amylase und dann mit Glucoamylase, durch Filtern und Reinigen des Produktes und durch Abtrennen und Entfernen eines verdaulichen Anteiles von dem Produkt durch Chromatographie an einen Ionenaustauscherharz.

7.  Verwendung nach Anspruch 6, wobei der Gehalt an unverdaulichen Bestandteilen in dem unverdaulichen Dextrin im Bereich von 50 bis 90 Gew.-% liegt.

8.  Verwendung nach Anspruch 6 oder 7, wobei der Gehalt des unverdaulichen Dextrins im Bereich von 0,1 bis 5 Gew.-% liegt.

9.  Verwendung nach einem der Ansprüche 6 bis 8, wobei das Pyrodextrin mit Glucoamylase, enthaltend eine kleine Menge α-Amylase, behandelt wird.

10. Verwendung nach einem der Ansprüche 6 bis 9, wobei das Ionenaustauscherharz ein stark saures Kationenaustauscherharz ist, welches vor der Verwendung in die Form eines Alkali- oder Erdalkalimetallsalzes gebracht wird.

## Revendications

1.  Utilisation d'une dextrine indigestible dans la préparation d'un aliment pour volailles domestiques, pour réduire la teneur en cholestérol des oeufs et augmenter la vitesse de ponte et la solidité de la coquille de l'oeuf.

2.  Utilisation selon la revendication 1, dans laquelle la dextrine indigestible peut être obtenue par grillage d'un amidon en présence d'un acide inorganique, pour donner une pyrodextrine, et traitement de la pyrodextrine avec une α-amylase.

3.  Utilisation selon la revendication 2, dans laquelle la teneur en dextrine indigestible est comprise entre 0,2 et 10 % en poids.

4.  Utilisation selon la revendication 2 ou 3, dans laquelle la teneur en constituants indigestibles de la dextrine indigestible est comprise entre 40 et 60 % en poids.

5.  Utilisation selon l'une des revendications 2 à 4, dans laquelle l'acide inorganique est l'acide chlorhydrique.

6.  Utilisation selon la revendication 1, dans laquelle la dextrine indigestible peut être obtenue par grillage d'un amidon en présence d'un acide inorganique, pour donner une pyrodextrine, traitement de la pyrodextrine avec une α-amylase puis avec une glucoamylase, filtration et purification du produit, puis séparation et élimination d'une fraction digestible du produit par chromatographie avec une résine échangeuse d'ions.

7.  Utilisation selon la revendication 6, dans laquelle la teneur en constituants indigestibles de la dextrine indigestible est comprise entre 50 et 90 % en poids.

8.  Utilisation selon la revendication 6 ou 7, dans laquelle la teneur en dextrine indigestible est comprise entre 0,1 et 5 % en poids.

9.  Utilisation selon l'une des revendications 6 à 8, dans laquelle on traite la pyrodextrine avec une glucoamylase contenant une petite quantité d'α-amylase.

10. Utilisation selon l'une des revendications 6 à 9, dans laquelle la résine échangeuse d'ions est une résine échangeuse de cations fortement acide transformée avant l'emploi en une forme à métal alcalin ou alcalino-terreux.